# EUROPEAN PATENT APPLICATION

(11) **EP 4 818 043 A1**
(43) Date of publication of application: **07.10.2026**
(21) Application number: 26151788.2
(22) Date of filing: 14.01.2026
(51) Int. Cl.: B64C 25/42, F16D 55/36, F16D 55/40, F16D 65/12, F16D 65/847

(54) **BRAKE PISTON HOUSINGS**

(30) Priority: 07.02.2025 US 202519048559
(71) Applicant: Honeywell International Inc., Charlotte, NC 28202 (US)
(72) Inventor: SHULA, Brian, Charlotte, 28202 (US); WURTZ, Zachary, Charlotte, 28202 (US); PARSONS, Abigail, Charlotte, 28202 (US); CARBALLAL, Lili Jazmin Pereyra, Charlotte, 28202 (US); BEEHLER, Jonathan T., Charlotte, 28202 (US); MAJNERT, Tomasz, Charlotte, 28202 (US)
(74) Representative: Haseltine Lake Kempner LLP

(57) **Abstract**

A brake piston housing may include a raised boss and a flange extending laterally from the raised boss along a flange plane. The flange may define a ventilation port extending through a thickness of the flange. The ventilation port may extend through the thickness of the flange along a port axis angled relative to the flange plane. An assembly may include a brake stack and the brake piston housing. A technique may include securing a brake heat shield and the brake piston housing adjacent a brake stack such that the brake heat shield is between the brake piston housing and the brake stack.

## Description

### TECHNICAL FIELD

The present disclosure relates to wheel assemblies, and brake piston housings of wheel assemblies.

### BACKGROUND

Vehicles, such as aircrafts, may use a wheel brake system that includes a multi-disc brake assembly. For example, the multi-disc brake assembly may include a plurality of rotors engaged with a wheel and a plurality of stators interleaved with the rotors. The rotors and wheel are configured to rotate around an axle, while the stators remain rotationally stationary. To decelerate rotational motion of a rotating wheel, the brake assembly may displace pistons against a pressure plate to squeeze the rotating rotors attached to the wheel against the stationary stators, therefore producing torque that decelerates the rotational motion of the wheel. This process generates heat within the rotors and the stators.

Wheel assemblies in operation may be exposed to heat. For example, braking assemblies may generate heat in course of operation, for example, arising from friction. Further, brakes may remain at elevated temperatures and require significant time to cool after landing. Such heat may be transferred to wheels, which may further increase wheel temperature.

### SUMMARY

In general, the disclosure describes brake piston housings, assemblies including brake piston housings, and techniques for forming brake piston housings. Brake piston housings according to the present disclosure include at least one ventilation port, which may promote flow of air toward a wheel assembly, or generally toward a heated component of a brake assembly, which in turn may promote cooling of the brake assembly. For example, the ventilation port may promote free air cooling and entrain airflow while a vehicle is moving. Further, buoyancy may cause cool air to be drawn through the ventilation port into the wheel assembly, and hot air to be expelled, when a vehicle is stationary.

In examples, an example brake piston housing (also referred to as a piston housing) includes a raised boss and a flange extending laterally from the raised boss along a flange plane. The raised boss is configured to receive a piston assembly, which in turn is configured to engage against a brake stack to cause braking. The flange may define a ventilation port extending through a thickness of the flange. The ventilation port may extend through the thickness of the flange along a port axis angled relative to the flange plane.

In examples, an example assembly may include a brake stack and a brake piston housing. The brake piston housing may include a raised boss and a flange extending laterally from the raised boss along a flange plane. The flange may define a ventilation port extending through a thickness of the flange. The ventilation port may extend through the thickness of the flange along a port axis angled relative to the flange plane.

In examples, an example technique includes securing a brake heat shield adjacent a brake stack. The technique may further include securing a brake piston housing adjacent the brake stack with the brake heat shield positioned between the brake piston housing and the brake stack. The brake piston housing may include a raised boss and a flange extending laterally from the raised boss along a flange plane. The flange may define a ventilation port extending through a thickness of the flange. The ventilation port may extend through the thickness of the flange along a port axis angled relative to the flange plane.

The details of one or more examples are set forth in the accompanying drawings and the description below. Other features, objects, and advantages will be apparent from the description and drawings, and from the claims.

### BRIEF DESCRIPTION OF THE FIGURES

The details of one or more examples are set forth in the accompanying drawings and the description below. Other features, objects, and advantages will be apparent from the description and drawings, and from the claims.
FIG. 1A is a schematic front view illustrating an example piston housing including a flange and a ventilation port.
FIG. 1B is a schematic side view of the piston housing of FIG. 1A showing an inclined passage of the ventilation port across a thickness of the flange.
FIG. 1C is a schematic partial perspective view of the piston housing of FIG. 1A showing the inclined passage of the ventilation port across the thickness of the flange.
FIG. 2A is schematic front view illustrating an example piston housing including a flange and a ventilation port having a rectangular cross-sectional shape.
FIG. 2B is a schematic partial perspective view of the piston housing of FIG. 2A showing the inclined passage of the ventilation port across the thickness of the flange.
FIG. 3A is a partial perspective view illustrating an example piston housing including a flange and a ventilation port having a rectangular shape.
FIG. 3B is a partial cross-sectional view illustrating a contour of the ventilation port of FIG. 3A.
FIG. 4A is a partial perspective view illustrating an example piston housing including a flange and a ventilation port having a rectangular shape.
FIG. 4B is a partial cross-sectional view illustrating a contour of the ventilation port of FIG. 4A.
FIG. 5 is a perspective view illustrating an example wheel including a plurality of rotor drive keys on an interior surface of the wheel.
FIG. 6 is a schematic cross-sectional view of an example wheel and brake assembly including the wheel of FIG. 5.

### DETAILED DESCRIPTION

In general, the disclosure describes wheel assemblies, brake piston housings of wheel assemblies, and techniques for forming wheel assemblies. A wheel assembly may include a heat-generating component (e.g., a brake assembly). A portion of a brake piston housing may interfere with or resist with heat transfer away from brake assembly, for example, by blocking air flow.

In some examples according to the present disclosure, a brake piston housing includes at least one ventilation port. The ventilation port may promote cooling of the brake assembly by promoting air flow through the ventilation port to the brake assembly, which in turn may dissipate heat away from the brake assembly. For example, the ventilation port may be inclined in a direction across the brake piston housing (e.g., upward toward the brake assembly). Such inclined ventilation ports may promote passive flow (e.g., via buoyancy and thermal differences) and/or active air flow toward the brake assembly. Thus, the ventilation ports may be oriented to increase airflow toward the brake assembly and placed in locations to increase airflow.

The ventilation port may thus promote free air cooling around a brake, and entrain additional airflow while a vehicle including the wheel assembly (e.g., an aircraft) is moving. For example, the ventilation port may cause cool air to move toward a heat sink, using buoyancy forces. More than one ventilation ports may be arranged in predetermined configurations configured to draw in air while the aircraft is moving, and which work on left-hand and right-hand brakes positions. The ventilation ports may improve airflow while the vehicle is stationary, using buoyancy. The relatively faster cooling rates may lead to shorter turnaround times for the vehicle (e.g., time for reuse after a prior use).

In aircraft, high temperatures after a landing can cause antioxidant (AO) degradation, excessive torque tube creep if parking brakes are applied while the brake is hot, or seal degradation around the piston bushing assembly. Thus, cooler temperatures may promote the integrity of brake structural components during vehicle maneuvers (e.g., post-landing taxi stops or parking for aircraft). Likewise, reduced high temperature exposure leads to less antioxidant degradation oxidation, and to less degradation of other components (e.g., piston bushing assembly seal degradation). Brake cooling can reduce damage to brake hardware following high-energy events (e.g., landings for aircraft), and they can allow the vehicle to be redeployed relatively quickly (e.g., an aircraft may begin taxiing for the next flight sooner after a landing). For example, the brake temperature monitoring sensor (BTMS) may reduce below a specified limit relatively quickly, permitting aircraft operation to be resumed sooner than in cases where brake temperatures reduce to the specified limit relatively slowly. Further, brake design enhancements that increase cooling rates can increase margins of safety associated with high temperature load applications.

In some examples, an assembly (e.g., a wheel assembly) may further include a brake heat shield between the brake piston housing and a heat source (e.g., a brake stack), and the ventilation port may direct air flow toward the brake heat shield.

The ventilation ports may be formed by machining preformed brake piston housings, or defined by molding or casting during formation of brake piston housings. The machining may be performed with a 5-axis mill, or any other suitable machining system. For example, rough or precursor ventilation ports may be forged, and then refined or polished with machining.

The ventilation ports may be located adjacent a top and/or a bottom (e.g., "12 o' clock" or "6 o'clock" positions) of a brake piston housing. Additional or alternative ventilation ports may be positioned at approximately "5 o'clock" and "7 o'clock" positions to allow more airflow.

Thus, brake piston housings according to the present disclosure may promote cooling of wheel assemblies, thus promoting structural integrity and performance of wheels and tires.

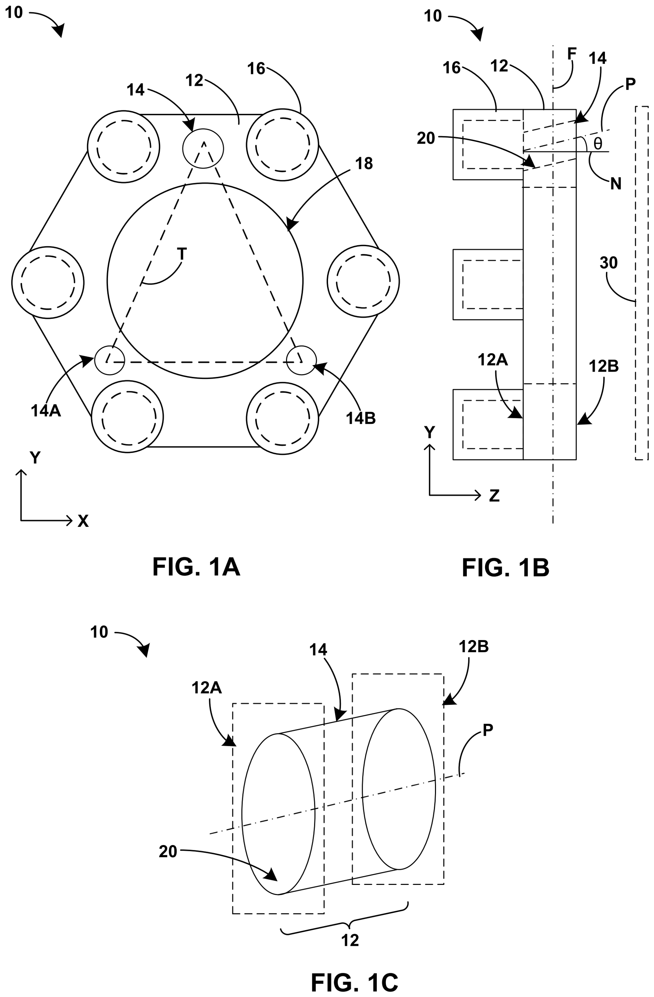

FIG. 1A is a schematic front view illustrating an example piston housing 10 including a flange 12 and a ventilation port 14. FIG. 1B is a schematic side view of piston housing 10 of FIG. 1A showing an inclined passage of ventilation port 14 across a thickness of flange 12. FIG. 1C is a schematic partial perspective view of piston housing 10 of FIG. 1A showing the inclined passage of ventilation port 14 across the thickness of flange 12.

Flange 12 may extend circumferentially and radially about a flange opening 18 along flange plane F. Flange 12 may have any suitable shape, for example, being generally disk-shaped, or having a generally curved or polygonal periphery, about flange opening 18.

Brake piston housing 10 may include a raised boss 16 and flange 12 extending laterally from raised boss 16 along a flange plane F. In some examples, raised boss 16 continuously or integrally extends from flange 12. Flange 12 and/or raised boss 16 may be formed of any suitable same or different material, example, a metal or an alloy. Raised boss 16 is configured to house a piston assembly to actuate a brake (e.g., by engaging the piston against a brake stack).

In some examples, brake piston housing 10 includes a plurality of raised bosses including raised boss 16. The plurality of raised bosses may be positioned in any suitable number or pattern along flange 12. In some examples, the plurality of raised bosses consists of six raised bosses symmetrically arranged adjacent a periphery of flange 12, about flange opening 18.

Flange 12 may define ventilation port 14 extending through the thickness of flange 12. For example, the thickness of the flange may extend between a first flange face 12A and a second flange face 12B. Ventilation port 14 may extend through the thickness of flange 12 along a port axis P angled relative to the flange plane. Thus, ventilation port 14 facilitates cooling of a wheel assembly (e.g., by promoting air flow across brake piston housing 10 to dissipate heat away from the wheel) when brake piston housing 10 is secured to the wheel assembly.

Ventilation port 14 may be adjacent raised boss 16. For example, ventilation port 14 may be nearer raised boss 16 along flange plane F than to any other component of brake piston housing 10. In some examples ventilation port 14 is between raised boss 16 and another raised boss, for example, along flange plane F.

In some examples, flange 12 defines a hexagonal flange periphery. In some such examples, the plurality of raised bosses includes six raised bosses arranged adjacent respective vertices of the hexagonal flange periphery. In some such examples, ventilation port 14 is between a pair of raised bosses of the plurality of raised bosses, e.g., in a circumferential direction along flange plane F.

Port axis P of ventilation port 14 may define an angle θ relative to a normal axis N to flange plane F (e.g., in a YZ plane). The angle θ may have any suitable magnitude, for example, being an acute or obtuse angle. In some examples, angle θ is acute. In some examples, angle θ is in a range of 90° or less, 75° or less, 60° or less, 50° or less, 45° or less, 30° or less, 20° or less, or 10° or less. In some examples, angle θ is in a range of at least 10°, at least 20°, at least 30°, at least 45°, at least 50°, at least 60°, or at least 75°. In some examples, port axis P is angled in a range of from 10° to 45° relative to normal axis N from flange plane F. In some such angles, port axis P is angled in a range of from 10° to 25° relative to normal axis N from flange plane F.

Further, port axis P of ventilation port may define a lateral angle relative to normal axis N to flange plane F in an XY plane. The lateral angle may have any suitable magnitude, for example, similar to any angle described with reference to angle θ.

Ventilation port 14 may have any suitable peripheral shape. For example, ventilation port 14 may define a curved periphery (e.g., along flange plane F). The curved periphery may follow any curved path, for example, a circle, an ellipse, or any other symmetric or asymmetric curved path. In some examples, as shown in FIG. 1A, ventilation port 14 defines a circular periphery.

Ventilation port 14 defines at least one port surface 20 extending across flange 12 (e.g., across a thickness of flange 12). Port surface 20 may have any suitable shape or geometric configuration across a thickness of flange 12. In some examples, port surface 20 is parallel to port axis P in a direction across flange 12. For example, as shown in FIGS. 1B and 1C, port surface 20 may be cylindrical. Thus, in some examples, port surface 20 may define a constant port width along the thickness of flange 12. The port width may have any suitable width (e.g., in a radial direction). For example, the port width may be in a range from 5% to 30% of a maximum diameter of flange 12. In some examples, the port width is at least 5%, at least 7%, at least 10%, at least 15%, at least 20%, at least 25%, or at least 30% of a maximum diameter of flange 12. In some examples, the port width is 30% or less, 25% or less, 20% or less, 15% or less, 10% or less, or 5% or less, of the maximum diameter of flange 12.

In some examples, port surface 20 defines a varying port width or diameter along the thickness of flange. For example, port surface 20 may define an increasing port width, or a decreasing port width in a direction from first flange face 12A to second flange face 12B. In cases where the change in port width is linear and symmetric, port surface 20 may define a conic section through a thickness of flange 12.

In some examples, the periphery of ventilation port 14 at one or both of first flange face 12A and second flange face 12B defines a sharp transition to port surface 20. For example, ventilation port may define an edge at one or both of first flange face 12A and second flange face 12B. In other examples, the periphery of ventilation port 14 at one or both of first flange face 12A and second flange face 12B defines a smooth or curved transition (or some transition from first flange face 12A and second flange face 12B into port surface 20), and does not define an edge at one or both of first flange face 12A and second flange face 12B. In some examples, a transition from one or both of first flange face 12A and second flange face 12B to port surface 20 forms a linear or curved cone or a funnel.

In some examples, ventilation port 14 is a first ventilation port, and piston housing 10 further includes a second sub-ventilation port 14A spaced from first ventilation port 14, for example, in a circumferential and/or radial direction along flange 12. In some examples, second ventilation port 14A opposes first ventilation port 14 (e.g., being diametrically opposed to first ventilation portion across a geometric center of flange 12). In some examples, flange 12 defines flange opening 18, and flange opening 18 at least partially extends between a straight line extending through geometric centers of first ventilation port 14 and second ventilation port 14A. In some examples, flange opening 18 is a central flange opening (passing through a geometric center of flange 12). In some examples, flange opening 18 is a circular central flange opening.

Thus, flange 12 may define second ventilation port 14A. Likewise, flange 12 may define further ventilation ports. For example, flange 12 may define a third ventilation port 14B (or additional ventilation ports). One or both of first ventilation port 14A or second ventilation port 14B (or additional ventilation ports) may be identical to first port 14A in one or more of shape, size, orientation, periphery, width, diameter, or position relative to an adjacent raised boss 16. In some examples, second port 14A and third port 14B are identical to each other, but smaller than first port 14, as shown in FIG. 1A. Second port 14A and third port 14B may be mirrored about vertical plane YZ. In some examples, each of second port 14A and third port 14B along a respective port axis (similar to port axis P) in a predetermined direction or orientation. In some examples, first ventilation port 14, second ventilation port 14A, and third ventilation port 14B are arranged at vertices of an isosceles triangle T about flange opening 18.

Ventilation ports may be located at any suitable relative locations and/or orientations along flange 12, or about flange opening 18. For example, in the arrangement shown in FIG. 1A, flange 12 is generally circular, first ventilation port 14 is positioned at about a position corresponding to "12 o'clock" relative to central flange opening 18 of flange 12, and second ventilation port 14A is positioned at about a position corresponding to "7 o'clock" relative to flange opening 18 of flange 12. In some examples, third ventilation port 14B is positioned at about a position corresponding to "5 o'clock" relative to flange opening 18 of flange 12. While a certain arrangement of ventilation ports is shown in FIG. 1A, ventilation ports may be arranged in any suitable pattern along flange 12 (e.g., symmetric or asymmetric about flange opening 18 or otherwise along flange 12).

In some examples, flange 12 may be mounted to a wheel assembly adjacent a brake heat shield 30. For example, brake heat shield 30 may be positioned between a brake stack and piston housing 12. In some examples, brake heat shield 30 is secured to flange 12.

While ventilation ports may be generally cylindrical as described with reference to FIGS. 1A to 1C, in other examples, one or more ventilation ports may have other shapes.

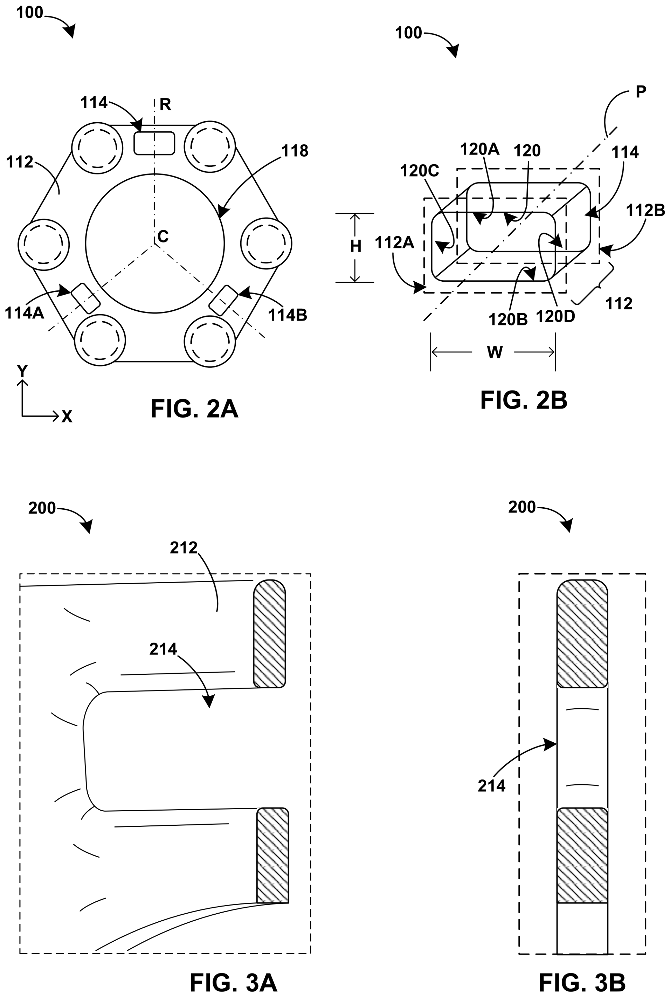

FIG. 2A is schematic front view illustrating an example piston housing 100 including a flange 112 and a ventilation port 114 having a rectangular cross-sectional shape. FIG. 2B is a schematic partial perspective view of piston housing 100 of FIG. 2A showing the inclined passage of ventilation port 114 across the thickness of flange 112.

Piston housing 100, flange 112, and ventilation port 114 may be respectively similar to piston housing 10, flange 12, and ventilation port 14, except for the differences described herein.

Ventilation port 114 extends across a thickness of flange 112 along port axis P, and has a generally rectangular cross-sectional shape (e.g., rectangular with sharp vertices or rounded vertices). Ventilation port 114 defines a port surface 120, port surface 120 including a first port face 120A and a second port face 120B opposing first port face 120A. Port surface 120 further includes a third port face 120C extending between first port face 120A and second port face 120B, and a fourth port face 120D extending between first port face 120A and second port face 120B. Fourth port face 120D opposes third port face 120C. In some examples, first port face 120A and second port face 120B are parallel to each other and port axis P in a direction across flange 112. Likewise, third port face 120C and fourth port face 120D may be parallel to each other and port axis P in a direction across flange 112. Port surface 120 (or one or more of port faces 120A, 120B, 120C, 120D, or any other portion of port surface 120) may be smooth, rounded, curved, or flat, or combinations thereof. In some examples, Port surface 120 (or one or more of port faces 120A, 120B, 120C, 120D, or any other portion of port surface 120) defines one or more of a ridge, a channel, a valley, a dimple, or some deviation away from a smooth or contoured surface.

While ventilation port 114 in FIG. 2A and 2B has four port faces, in other examples, ventilation port 114 may have three, five, or more face. Thus, ventilation port 114 may define a polygonal port periphery having vertices (e.g., triangular, pentagonal, hexagonal, and so on, and symmetric or asymmetric). In some examples, the polygonal port periphery is a rounded polygonal port periphery having rounded vertices. For example, as shown in FIGS. 2A and 2B, ventilation port 112 defines a rounded rectangular port periphery.

As shown in FIG. 2B, ventilation port 114 has a constant cross-sectional shape across a thickness of flange 112. However, in other examples, the cross-sectional shape or dimensions may vary across a thickness of flange 112. For example, the cross-sectional shape may vary such that a cross-sectional area increases or decreases linearly or non-linearly between a first flange face 112A and a second flange face 112B of flange 112.

Ventilation port 114 laterally extends along flange 112 to define a port width W in a circumferential direction and a port height H in a radial direction relative to a geometric center C of flange 112. As described herein, one or both of port width W or port height H may be constant across a thickness of flange 112, or vary across a thickness of flange 112. Where the port width W or port height H varies, references to dimensions of port width W or port height H are with respect to an average, maximum, or minimum port width along thickness of flange 112. Port width W may be greater than, equal to, or less than port height H. In some examples, port width W is greater than port height H.

Ventilation port 114 may extend in any suitable direction along flange 112 relative to a radial axis R passing through geometric center C of flange 112. For example, port width W may be normal (90°) to radial axis R passing between center C of flange 112 and a center of ventilation port 114. In other examples, port width W is angled relative to radial axis R passing between center C of the flange and the center of ventilation port 114.

For example, ventilation port 114 may extend in a direction disposed at an acute or an obtuse angle relative to radial axis R of flange 112 (e.g., at an intersection of radial axis R and the center of the ventilation port). For example, port width W of ventilation port 114 may extend at an angle in a range from 5° to 85° or in any intervening range, relative to radial axis R of flange 112. In some examples, port width W extends at an angle of at least 5°, at least 10°, at least 15°, at least 20°, at least 30°, at least 45°, at least 50°, at least 60°, at least 75°, or at least 80°, relative to radial axis R of flange 12. In some examples, port width W extends at an angle of 80° or less, 75° or less, 60° or less, 50° or less, 45° or less, 30° or less, 20° or less, 15° or less, or 10° or less, relative to radial axis R of flange 112.

Ventilation port 114 may have any suitable port width W (e.g., in a circumferential direction). For example, port width W may be in a range from 1% to 20% of a maximum diameter of flange 112. In some examples, port width W is at least 1%, at least 2%, at least 3%, at least 4%, at least 5%, at least 10%, at least 12%, at least 15%, or at least 20% of the maximum diameter of flange 112. In some examples, port width W is 20% or less, 15% or less, 12% or less, 10% or less, 5% or less, 4% or less, 3% or less, 2% or less, or 1% or less of the maximum diameter of flange 112.

Ventilation port 114 may have any suitable port height H (e.g., in a direction along radial axis R). For example, the port height H may be is in a range from 5% to 30% of a maximum diameter of flange 112. In some examples, port height H is at least 1%, at least 2%, at least 3%, at least 4%, at least 5%, at least 10%, at least 12%, at least 15%, or at least 20% of the maximum diameter of flange 112. In some examples, port height H is 20% or less, 15% or less, 12% or less, 10% or less, 5% or less, 4% or less, 3% or less, 2% or less, or 1% or less of the maximum diameter of flange 112.

Port width W may have any suitable ratio relative to port height H. For example, a ratio of port width W to port height H may be in a range from 1:10 to 10:1.

Port width W may have any suitable ratio relative to a thickness of flange 112. For example, a ratio of port width W to a thickness of flange 112 may be in a range from 1:10 to 10:1. Port height H may have any suitable ratio relative to a thickness of flange 112. For example, a ratio of port height H to a thickness of flange 112 may be in a range from 1:10 to 10:1.

Ventilation port 114 may exhibit a sharp transition from first flange face 112A and/or second flange face 112B to port surface 120 (e.g., having a sharp edge at one or both of first flange face 112A and/or second flange face 112B). In other examples, ventilation port 114 exhibits smooth, curved, or rounded transition from first flange face 112A and/or second flange face 112B to port surface 120 (e.g., having a smooth contour at one or both of first flange face 112A and/or second flange face 112B). In some examples, ventilation port 114 may define a linear or curved funnel at first flange face 112A and/or second flange face 112B extending to port surface 120.

In some examples, flange 112 defines more than one ventilation port. For example, ventilation port 114 may be a first ventilation port, and flange 112 may define a second ventilation port 114A and a third ventilation port 114B. First ventilation port 114, second ventilation port 114A, and third ventilation port 114B may be arranged in any suitable configuration along flange 112. In some examples, first ventilation port 114, second ventilation port 114A, and third ventilation port 114B are arranged at vertices of an isosceles triangle about a flange opening 118 of flange 112.

In the example shown in FIG. 2A, first ventilation port 114 is positioned at about a position corresponding to "12 o'clock" relative to center C of flange 112, and second ventilation port 114A is positioned at about a position corresponding to "7 o'clock" relative to center C of flange 112. In some examples, third ventilation port 114B is positioned at about a position corresponding to "5 o'clock" relative to center C of flange 112. While a certain arrangement of ventilation ports is shown in FIG. 2A, ventilation ports may be arranged in any suitable pattern along flange 112 (e.g., symmetric or asymmetric about flange center or a flange opening, or otherwise along flange 112).

Two or more of first ventilation port 114, second ventilation port 114A, and third ventilation port 114B (or additional ventilation ports) may be identical to each other, or differ from one or more ventilation ports in one or more of port height H, port width W, angle of port axis P, or any other aspect. In some examples, first ventilation port 114 has port width W that is greater than that of second ventilation port 114A and third ventilation port B. In some examples, first ventilation port 114 has port height H that is greater than that of second ventilation port 114B and the third ventilation port 114B.

When more than one ventilation ports are present, their respective port heights or widths may be aligned with respect to a respective radial axis passing from center C of flange 112 to a respective center of a ventilation port. In some examples, a longest dimension of each ventilation port is normal along a plane of flange 112 to a respective radial axis.

FIG. 3A is a partial perspective view illustrating an example piston housing 200 including a flange 212 and a ventilation port 214 having a rounded rectangular shape. FIG. 3B is a partial cross-sectional view illustrating a contour of ventilation port 214 of FIG. 3A. In some examples, first ventilation port 114 of piston housing 100 may be similar to ventilation port 214.

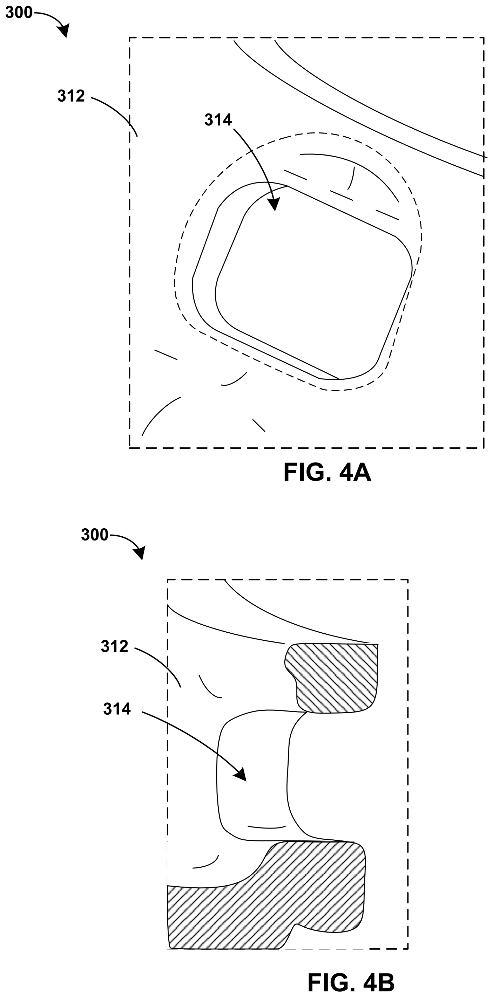

FIG. 4A is a partial perspective view illustrating an example piston housing 300 including a flange 312 and a ventilation port 314 having a rounded rectangular shape. FIG. 4B is a partial cross-sectional view illustrating a contour of ventilation port 314 of FIG. 4A. In some examples, second ventilation port 114A and third ventilation port 114B of piston housing 100 may be similar to ventilation port 314.

Brake piston housings according to the present disclosure may be formed by any suitable technique. For example, a sheet of metal or an alloy may be punched, stamped, or otherwise machined, to define ventilation ports. The ventilation ports may be formed before or after flanges. For example, flanges may be initially machined or formed, followed by forming ventilation ports. Alternatively, ventilation ports may be machined together with a rest of a flange.

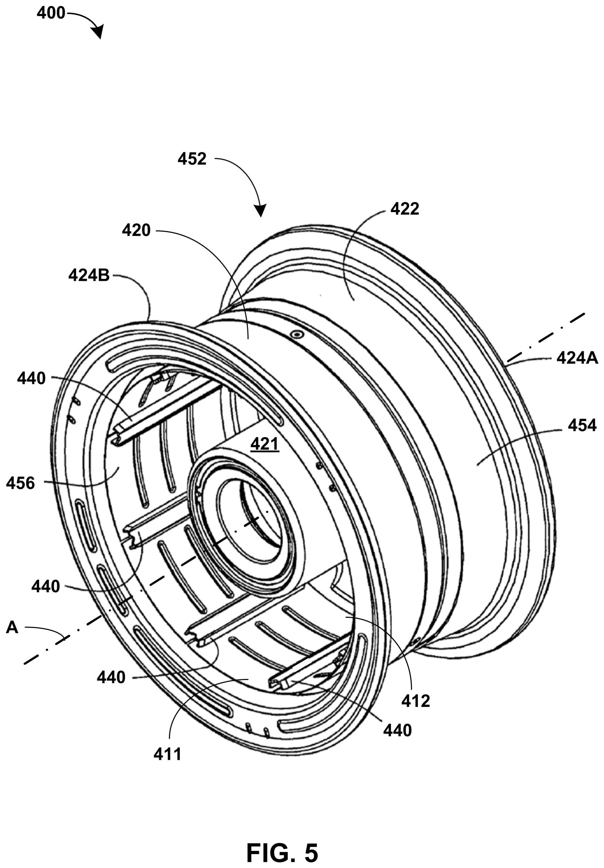

FIG. 5 is a perspective view of an example wheel 400 including a plurality of rotor drive keys 440 on an interior surface 456 of wheel 400. In some examples, wheel 400 is a part of an aircraft vehicle. In other examples, wheel 400 may be a part of any other vehicle, such as, for example, any marine vessel, land vehicle, or other vehicle. Wheel 400 may include a rim 452 defining an exterior surface 454 and interior surface 456. Rim 452 may include tubewell 420, wheel hub 421, and outboard tubewell 422. In some examples, interior surface 456 may include an inner diameter of tubewell 420. For example, in some cases, interior surface 456 may be referred to as an inner diameter surface of wheel 400.

In some examples, a tire (not shown) may be mounted on exterior surface 454 of rim 452. For example, wheel 400 may include an inboard bead seat 424B and an outboard bead seat 424A configured to retain a tire on exterior surface 454 of rim 452.

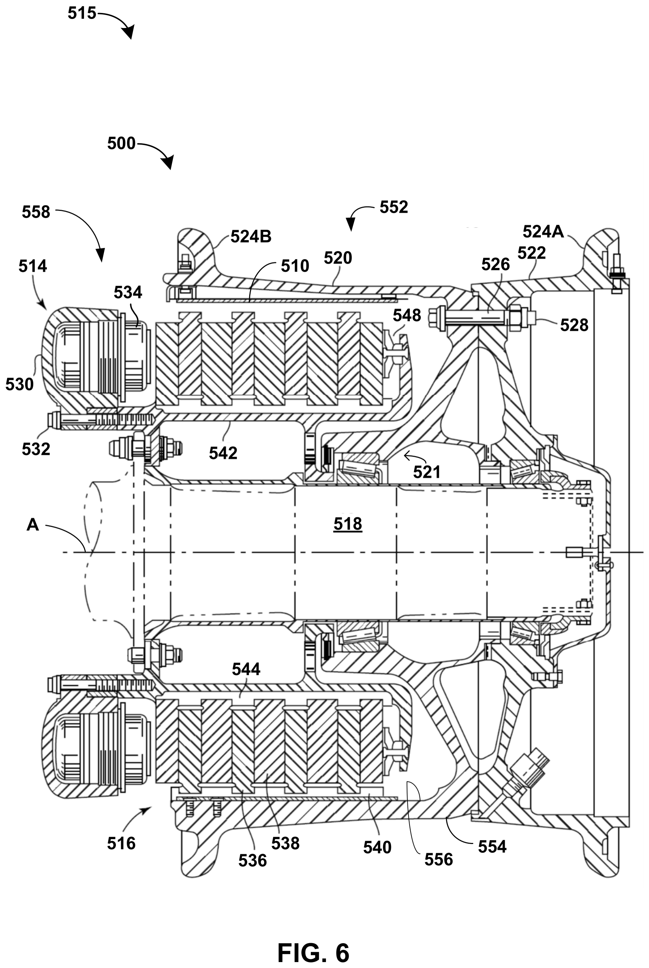

Wheel 400 is configured to engage with one or more rotors (not shown in FIG. 5) of a braking assembly. For example, as shown in the example of FIG. 5, a plurality of rotor drive keys 440 are attached to interior surface 456, and each rotor drive key of the plurality of rotor drive keys 440 may be configured to engage with one or more rotors of a brake disc stack of a braking assembly. An example braking assembly is described in more detail with respect to FIG. 6.

The plurality of rotor drive keys 440 extending in the substantially axial direction may enable wheel 400 to slide onto a braking assembly. For example, a plurality of rotors of a braking assembly may include drive slots configured to receive the plurality of rotor drive keys 440, enabling the plurality of rotor drive keys 440 to be slid into respective drive slots of the plurality of rotors. In other examples, one or more rotor drive keys of the plurality of rotor drive keys 440 may be oriented in a different direction and/or may engage with one or more rotors in a different manner.

As illustrated in the example of FIG. 5, in some examples, the plurality of rotor drive keys 440 may be mounted at substantially equal circumferential distances around interior surface 456 of wheel 400. In other examples, one or more of the plurality of rotor drive keys 440 may be mounted a different circumferential distance from an adjacent rotor drive than at least one other rotor drive key. Here and elsewhere, circumferential distance means the length of an arc on the interior surface 456 of wheel 400 where the arc is in a plane perpendicular to the substantially axial direction of wheel 400. Rotor drive keys 440 may be integrally formed with tubewell 420 or may be separate from and mechanically affixed to tubewell 420.

A brake heat shield (e.g., brake heat shield 30 described with reference to FIG. 1B) may be secured between a brake piston housing and a brake stack of a brake assembly of wheel 400.

FIG. 6 is a schematic cross-sectional view of an example wheel and brake assembly 515 including a wheel 500 and a braking assembly 558. Wheel and brake assembly 515 is shown and described to provide context to the example brake piston housings and brake heat shields described in the present disclosure. The brake piston housings described in the present disclosure, however, may be used with any suitable wheel and brake assembly in other examples.

Wheel 500 includes tubewell 520, wheel hub 521, outboard tubewell 522, outboard bead seat 524A, and inboard bead seat 524B, rim 552, exterior surface 554, and interior surface 556, which may be configured individually and in relation to each other in the same manner as that discussed for the like-named components of wheel 400 (FIG. 5). Wheel 500 may be configured to be rotatably carried on axle 518. For example, wheel 500 may be rotatably carried on axle 518 by wheel hub 521. In turn, wheel 500 may impart motion to a vehicle including or mounted on the wheel and brake assembly 515. In the example shown in FIG. 6, tubewell 520 and outboard tubewell 522 are mechanically coupled by lug bolt 526 and lug nut 528. Other connection techniques may be used in other examples.

Braking assembly 558 includes an actuator assembly 514 and a brake stack 516. Actuator assembly 514 includes brake piston housing 530, actuator housing bolt 532, and piston 534. Brake stack 516 includes a plurality of brake discs, which include interleaved rotor brake discs 536 and stator brake discs 538. Rotor brake discs 536 are configured to move relative to stator brake discs 538, e.g., rotationally about axis A and axially along axis A relative to stator brake discs 538. Rotor brake discs 536 engage with wheel 500, and in particular tubewell 520, by rotor drive keys 540. Stator brake discs 538 are mounted to torque tube 542 by splines 544. Wheel and brake assembly 515 may support any variety of private, commercial, or military aircraft or other type of vehicle.

Wheel and brake assembly 515 may be mounted to a vehicle via axle 518. Torque tube 542 supports actuator assembly 514 and stator brake discs 538. Axle 518 may be mounted on a strut of a landing gear (not shown) or other suitable component of the vehicle to connect wheel and braking assembly 515 to the vehicle.

During operation of the vehicle, braking may be necessary from time to time, such as during landing and taxiing procedures of an aircraft. Wheel and brake assembly 515 is configured to provide a braking function to the vehicle via actuator assembly 514 and brake stack 516. Actuator assembly 514 includes piston housing 530 and piston 534. Actuator assembly 514 may include different types of actuators such as one or more of, e.g., an electrical-mechanical actuator, a hydraulic actuator, a pneumatic actuator, or the like. During operation, piston 534 may extend away from piston housing 530 to axially compress brake stack 516 against compression region 548 for braking.

Rotor brake discs 536 are slidably engaged with rotor drive keys 540 for common rotation with tubewell 520 and rotor drive keys 540. Stator brake discs 538 are mounted to torque tube 542 by splines 544. In the example of FIG. 6, brake stack 516 includes four rotors and five stators. However, a different number of rotors and/or stators may be included in brake stack 516 in other examples. Rotor brake discs 536 and stator brake discs 538 may provide opposing friction surfaces for braking an aircraft. In some examples, wheel and brake assembly 515 may include a wheel heat shield 510 between rotor brake discs 536 and tubewell 520 in order to, for example, limit thermal transfer between brake stack 516 and wheel 500. In some examples, wheel and brake assembly 515 may include a brake heat shield 30 (as described with reference to FIG. 1B) between brake stack 516 (e.g., rotor brake discs 536) and piston housing 530, for example, to limit thermal transfer between brake stack 516 and brake piston housing 530.

In some examples, splines 544 may be circumferentially spaced about an outer portion of torque tube 542. Stator brake discs 538 may include a plurality of radially inwardly disposed lug notches along an inner diameter of the brake disc configured to engage with splines 544. Similarly, rotor brake discs 536 may include a plurality of radially inwardly disposed drive slots along an outer periphery (e.g., an outer diameter in the case of a disc having a circular cross-section) of the rotor brake disc. The drive slots may be configured to engage with rotor drive keys 540. As such, rotor brake discs 536 will rotate with the motion of wheel 500 while stator brake discs 538 remain stationary, allowing the friction surfaces of an adjacent stator brake disc 538 and rotor brake disc 536 to engage with one another to decelerate the rotation of wheel 500.

Any suitable technique may be used to form wheel assemblies including brake piston housings according to the present disclosure. In some examples, an example technique includes securing a brake heat shield (e.g., heat shield 30) adjacent a brake stack (e.g., brake stack 516). The technique further includes securing a brake piston housing (e.g., any brake piston housing according to the present disclosure) adjacent the brake stack with the brake heat shield positioned between the brake piston housing and the brake stack. The brake piston housing may include a raised boss, and a flange extending laterally from the raised boss along a flange plane. The flange may define a ventilation port extending through a thickness of the flange. The ventilation port may extend through the thickness of the flange along a port axis angled relative to the flange plane.

The following clauses illustrate example subject matter described herein.

Clause 1: A brake piston housing including: a raised boss; and a flange extending laterally from the raised boss along a flange plane, the flange defining a ventilation port extending through a thickness of the flange, where the ventilation port extends through the thickness of the flange along a port axis angled relative to the flange plane.

Clause 2: The brake piston housing of clause 1, where the port axis is angled in a range of from 10° to 45° relative to a normal axis from the flange plane.

Clause 3: The brake piston housing of clause 2, where the port axis is angled in a range of from 10° to 25° relative to the normal axis from the flange plane.

Clause 4: The brake piston housing of any of clauses 1 to 3, where the flange extends circumferentially and radially about a flange opening along the flange plane, and where the ventilation port is adjacent the raised boss.

Clause 5: The brake piston housing of clause 4, where the flange defines a hexagonal flange periphery, where the brake piston housing includes a plurality of raised bosses including the raised boss and arranged adjacent vertices of the hexagonal flange periphery, and where the ventilation port is between a pair of raised bosses of the plurality of raised bosses.

Clause 6: The brake piston housing of any of clauses 1 to 5, where the ventilation port defines a curved periphery.

Clause 7: The brake piston housing of clause 6, where the curved periphery is a circular periphery.

Clause 8: The brake piston housing of any of clauses 1 to 7, where the ventilation port defines at least one port surface extending across the flange, and where the at least one port surface is parallel to the port axis in a direction across the flange.

Clause 9: The brake piston housing of clause 8, where the at least one port surface includes: a first port face; a second port face opposing the first port face; a third port face extending between the first port face and the second port face; and a fourth port face extending between the first port face and the second port face and opposing the third port face, where the first port face and the second port face are parallel to the port axis in a direction across the flange.

Clause 10: The brake piston housing of any of clauses 1 to 9, where the ventilation port laterally extends along the flange to define a port width in a circumferential direction and a port height in a radial direction relative to a center of the flange, and where the port width is greater than the port height.

Clause 11: The brake piston housing of clause 10, where the port width is normal to a radial axis passing between the center of the flange and a center of the ventilation port.

Clause 12: The brake piston housing of clause 10, where the port width is angled relative to a radial axis passing between the center of the flange and a center of the ventilation port.

Clause 13: The brake piston housing of any of clauses 1 to 12, where the ventilation port defines a rounded polygonal port periphery having rounded vertices.

Clause 14: The brake piston housing of clause 13, where the ventilation port defines a rounded rectangular port periphery.

Clause 15: The brake piston housing of any of clauses 1 to 14, where the ventilation port is a first ventilation port, where the flange defines a second ventilation port and a third ventilation port, where the first ventilation port, the second ventilation port, and the third ventilation port are arranged at vertices of an isosceles triangle about the flange opening.

Clause 16: The brake piston housing of clause 15, where the first ventilation port has a port width that is greater than that of the second ventilation port and the third ventilation port.

Clause 17: The brake piston housing of clause 15, where the first ventilation port has a port height that is greater than that of the second ventilation port and the third ventilation port.

Clause 18: An assembly including: a brake stack; and a brake piston housing including: a raised boss; and a flange extending laterally from the raised boss along a flange plane, the flange defining a ventilation port extending through a thickness of the flange, where the ventilation port extends through the thickness of the flange along a port axis angled relative to the flange plane.

Clause 19: The assembly of clause 18, further including a brake heat shield, where the brake heat shield is between the brake stack and the brake piston housing.

Clause 20: A method including: securing a brake heat shield adjacent a brake stack; and securing a brake piston housing adjacent the brake stack with the brake heat shield positioned between the brake piston housing and the brake stack, the brake piston housing including: a raised boss; and a flange extending laterally from the raised boss along a flange plane, the flange defining a ventilation port extending through a thickness of the flange, where the ventilation port extends through the thickness of the flange along a port axis angled relative to the flange plane.

Various examples have been described. These and other examples are within the scope of the following claims.

## Claims

1. A brake piston housing comprising:
a raised boss; and
a flange extending laterally from the raised boss along a flange plane, the flange defining a ventilation port extending through a thickness of the flange,
wherein the ventilation port extends through the thickness of the flange along a port axis angled relative to the flange plane.

2. The brake piston housing of claim 1, wherein the port axis is angled in a range of from 10° to 45° relative to a normal axis from the flange plane.

3. The brake piston housing of claim 1 or 2, wherein the flange extends circumferentially and radially about a flange opening along the flange plane, and wherein the ventilation port is adjacent the raised boss.

4. The brake piston housing of claim 3, wherein the flange defines a hexagonal flange periphery, wherein the brake piston housing comprises a plurality of raised bosses comprising the raised boss and arranged adjacent vertices of the hexagonal flange periphery, and wherein the ventilation port is between a pair of raised bosses of the plurality of raised bosses.

5. The brake piston housing of any one of claims 1 to 4, wherein the ventilation port defines a curved periphery.

6. The brake piston housing of claim 5, wherein the curved periphery is a circular periphery.

7. The brake piston housing of any one of claims 1 to 6, wherein the ventilation port defines at least one port surface extending across the flange, and wherein the at least one port surface is parallel to the port axis in a direction across the flange.

8. The brake piston housing of claim 7, wherein the at least one port surface comprises:
a first port face;
a second port face opposing the first port face;
a third port face extending between the first port face and the second port face;
and
a fourth port face extending between the first port face and the second port face and opposing the third port face,
wherein the first port face and the second port face are parallel to the port axis in a direction across the flange.

9. The brake piston housing of any one of claims 1 to 8, wherein the ventilation port laterally extends along the flange to define a port width in a circumferential direction and a port height in a radial direction relative to a center of the flange, and wherein the port width is greater than the port height.

10. The brake piston housing of claim 9, wherein the port width is normal to a radial axis passing between the center of the flange and a center of the ventilation port, or
wherein the port width is angled relative to a radial axis passing between the center of the flange and a center of the ventilation port.

11. The brake piston housing of any one of claims 1 to 10, wherein the ventilation port defines a rounded polygonal port periphery having rounded vertices.

12. The brake piston housing of claim 11, wherein the ventilation port defines a rounded rectangular port periphery.

13. The brake piston housing of any one of claims 1 to 12, wherein the ventilation port is a first ventilation port, wherein the flange defines a second ventilation port and a third ventilation port, wherein the first ventilation port, the second ventilation port, and the third ventilation port are arranged at vertices of an isosceles triangle about the flange opening.

14. An assembly comprising:
a brake stack; and
the brake piston housing of any one of claims 1 to 13.

15. A method comprising:
securing a brake heat shield adjacent a brake stack; and
securing the brake piston housing of any one of claims 1 to 13 adjacent the brake stack with the brake heat shield positioned between the brake piston housing and the brake stack.
